# EUROPEAN PATENT APPLICATION

(11) **EP 2 184 739 A2**
(43) Date of publication of application: **12.05.2010**
(21) Application number: 09251103.9
(22) Date of filing: 16.04.2009
(51) Int. Cl.: G11B 20/00

(54) **Copy control method**

(30) Priority: 29.07.2008 JP 2008194290; 29.07.2008 JP 2008194291; 24.09.2008 JP 2008243582; 24.09.2008 JP 2008243581
(71) Applicant: Hitachi Ltd., Chiyoda-ku Tokyo (JP)
(72) Inventor: Tsuruga, Sadao, Tokyo 100-8220 (JP); Okamoto, Hiroo, Tokyo 100-8220 (JP)
(74) Representative: Calderbank, Thomas Roger

(57) **Abstract**

In a reception apparatus (3) for receiving digital content and a plurality of types of copy control information for controlling copying of the digital content, and recording the digital content on a recording medium according to the plurality of types of copy control information, when first information in the received plurality of types of copy control information shows copy generation information permitting one-generation copying, the digital content is allowed to be recorded in a state of being copyable up to a limited number in the case where second information in the received plurality of types of copy control information shows limited-number copy permission, and the digital content is recorded only once in a copy prohibited state in the case where the second information does not show limited-number copy permission.

## Description

The present invention relates to copy control for content.

With regard to the above-mentioned technical field, JP-A-2002-319227 raises an issue of "improving usability when rewriting information for which copying is permitted only for one generation (Copy One Generation) to information for which any further copying is prohibited (Copy No More) and recording the information" and, as a solution to the issue, recites that "one-generation copying is permitted (Copy One Generation) within a predetermined time period after recording in order to make up for any part whose recording is suspended due to a failure and the like during recording, and also two same streams are recorded on a medium so that one stream is used for normal viewing and the other stream is moved to and saved on another medium according to need".

In recent years, with the expansion of digital broadcasting services, recording apparatuses capable of recording digital broadcasts have become widely available.

In digital broadcast recording, a received digital broadcast is recorded on an HDD (hard disk drive) internal to a recording apparatus, and the digital broadcast program is copied from the HDD to another recording medium (e.g. an optical disc, a semiconductor memory, another HDD) if the digital broadcast program is copyable (Copy Free), and moved from the HDD to the other recording medium if only one-generation recording of the digital broadcast program is permitted (Copy One Generation, meaning that copying of a copy (copying for two or more generations) is not permitted).

A recording apparatus of JP-A-2002-319227 can perform copying within the specified time period, even when the above-mentioned digital broadcast program is Copy One Generation. This makes it possible to make up for the case where the recording is suspended.

In the recording apparatus of JP-A-2002-319227, however, no copying is permitted once the specified time period has elapsed, as is conventionally the case. For instance, when a user wants to record many programs and accesses concentrate on an HDD in a recording apparatus that cannot simultaneously perform recording of a program on the HDD and copying from the HDD to an optical disc, there is a possibility that the specified time period elapses before the copying from the HDD to the optical disc is completed.

In view of this, the present invention provides an apparatus or method for improving usability while performing copy control, when recording a digital broadcast program.

For example, in a copy control method in a reception apparatus for receiving digital content and a plurality of types of copy control information for controlling copying of the digital content, and recording the digital content on a first recording medium and a second recording medium according to the plurality of types of copy control information, when first information in the received plurality of types of copy control information shows copy generation information permitting one-generation copying, in a case where second information in the received plurality of types of copy control information shows limited-number copy permission indicating that a first number of copies are permitted, the digital content is allowed to be recorded and managed on the first recording medium in a state of being copyable up to a second number of copies, the digital content is allowed to be recorded and managed on the second recording medium in a state of being copyable up to a third number of copies, control is performed so that a sum of the second number of copies and the third number of copies does not exceed the first number of copies, and in a case where an output path when copying the digital content to the first recording medium and an output path when copying the digital content to the second recording medium are different from each other, different copy control is further performed.

According to the above-mentioned means, when recording a digital broadcast program, usability of recorded content can be improved while performing copy control.

Other objects, features and advantages of the invention will become apparent from the following description of the embodiments of the invention taken in conjunction with the accompanying drawings.

### IN THE DRAWINGS

FIG. 1 is a block diagram showing an example of a structure of a system.

FIG. 2 is a block diagram showing an example of a structure of a transmission apparatus 1.

FIG. 3 shows an example of a structure of a content use descriptor which is one type of copy control information.

FIG. 4 shows a description example of each field of the content use descriptor.

FIG. 5 shows an example of a structure of a digital copy control descriptor which is one type of copy control information.

FIG. 6 shows an example of information for controlling copy generations.

FIG. 7 shows an example of a reception process in a reception apparatus 3 for each field of the content use descriptor transmitted from the transmission apparatus 1.

FIG. 8 shows an application example of protection of program content by using copy control information by the transmission apparatus 1.

FIG. 9 shows an example of control when the reception apparatus 3 stores (records) program content using copy control information.

FIG. 10 is a block diagram showing an example of a structure of the reception apparatus 3.

FIG. 11 shows an example of a transport packet to which a time stamp is added.

FIG. 12 shows an example of recording program content on a recording medium.

FIG. 13 is a flowchart showing an example of a procedure of creating copy information and copy number of management information when recording program content for which one-generation copying is permitted.

FIG. 14 is a flowchart showing an example of a procedure of copying program content.

FIG. 15 is a flowchart showing an example of a procedure of moving program content.

FIG. 16 shows an example of a recording medium capable of management of a plurality of copies.

FIG. 17 is a flowchart showing an example of a procedure of creating copy information and copy number of management information when recording program content for which one-generation copying is permitted.

FIG. 18 is a view for understanding of a limitation on the number of copies.

FIG. 19 is a view for understanding of a substitute output destination of content stored as "limited-number copyable" and copy control for the content.

The following describes an embodiment of the present invention. Note that the present invention is not limited to this embodiment. This embodiment mainly relates to handling of information for which one-generation copying is permitted.

### <System>

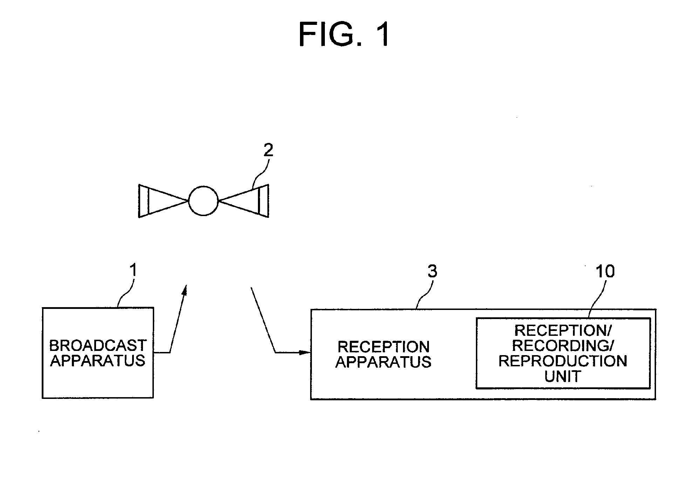

FIG. 1 is a block diagram showing an example of a structure of a system in this embodiment. An example of transmitting/receiving information by broadcasting and recording/reproducing the information is shown here.

Reference numeral 1 is a transmission apparatus installed in an information provision station such as a broadcast station. Reference numeral 2 is a relay apparatus installed in a relay station, a broadcast satellite, or the like. Reference numeral 3 is a reception apparatus installed in a user's home or the like. Reference numeral 10 is a reception/recording/reproduction unit included in the reception apparatus 3. The reception/recording/reproduction unit 10 can record and reproduce broadcast information.

The transmission apparatus 1 transmits a modulated signal wave via the relay apparatus 2. In addition to transmission by a satellite as shown in the drawing, transmission by a cable, transmission by a telephone line, transmission by terrestrial broadcasting, transmission using an IP (Internet Protocol) via a network such as the Internet, and the like can also be used, for example. The signal wave received by the reception apparatus 3 is demodulated to an information signal, and recorded having been converted to a signal suitable for recording according to need, as described later. In the case where the reception apparatus 3 includes a display, the user can view video/audio shown by the information signal on the display. In the case where the reception apparatus 3 does not include a display, the user can view video/audio shown by the information signal by connecting the reception apparatus 3 to a display not illustrated.

### <Transmission Apparatus>

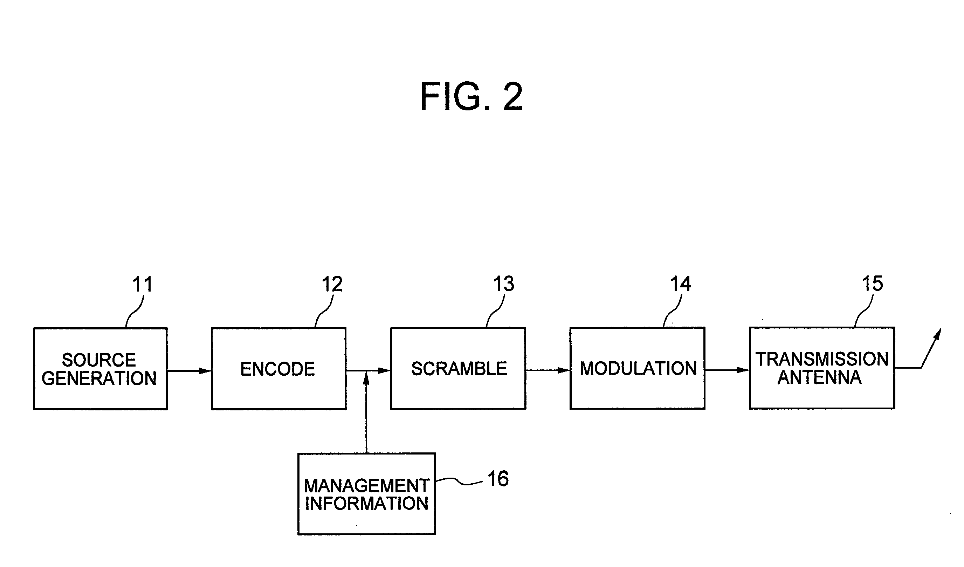

FIG. 2 is a block diagram showing an example of a structure of the transmission apparatus 1 in the system shown in FIG. 1.

Reference numeral 11 is a source generation unit, reference numeral 12 is an encoding unit that performs compression according to MPEG, H.264, or the like, reference numeral 13 is a scrambling unit, reference numeral 14 is a modulation unit, reference numeral 15 is a transmission antenna, and reference numeral 16 is a management information addition unit. Information such as video/audio generated in the source generation unit 11 which is composed of a camera, a recording/reproduction device, and the like is compressed in data amount in the encoding unit 12 so as to be able to be transmitted with smaller band occupancy. The compressed information is encrypted for transmission in the scrambling unit 13 so as to be available to specific viewers, according to need. After being modulated to a signal suitable for transmission in the modulation unit 14 according to OFDM, TC8PSK, QPSK, or the like, the signal is transmitted from the transmission antenna 15 to the relay apparatus 2 as a radio wave. At this time, the management information addition unit 16 adds copy control information which is information for controlling copying, and information such as a current time.

Note that a plurality of pieces of information are often multiplexed into one radio wave by a method such as time division or spectrum spread. In such a case, there are a plurality of lines between the source generation unit 11 and the encoding unit 12, and a multiplex unit (multiplexing unit) for multiplexing a plurality of pieces of information is provided between the encoding unit 12 and the scrambling unit 13, though not shown in FIG. 2 for simplicity.

### <Copy Control Information>

The copy control information is information for controlling limitations such as copyability and the number of copies, and is added by the management information addition unit 16, for example. The copy control information includes a content use descriptor, a digital copy control descriptor, and the like.

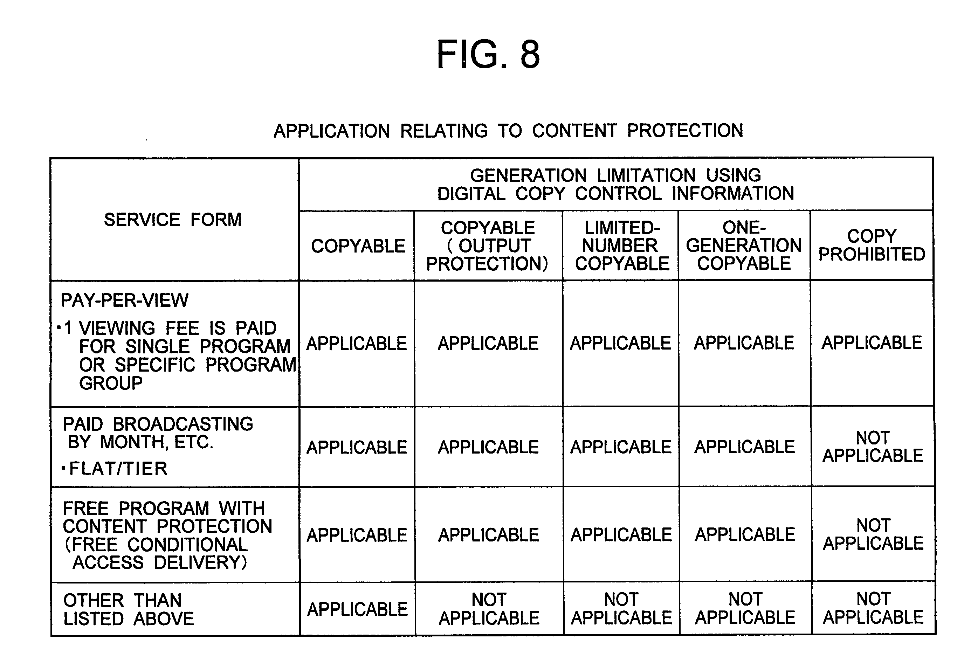

FIG. 8 shows an application example relating to protection of program content by using the copy control information.

"Applicable" means that, for content of each service form, the corresponding generation limitation using digital copy control information can be selected by the transmitter. For instance, in the case of "pay-per-view", any digital copy control information can be used. In the case of "paid broadcasting by month, etc.", "copy prohibited" cannot be selected by the transmitter.

"Flat/tier" is such that, in paid broadcasting and the like, subscribing a plurality of channels collectively is referred to as flat subscription, and subscribing per channel is referred to as tier subscription.

"Other than listed above" includes, for example, "a program which is not a paid broadcast and has no content protection".

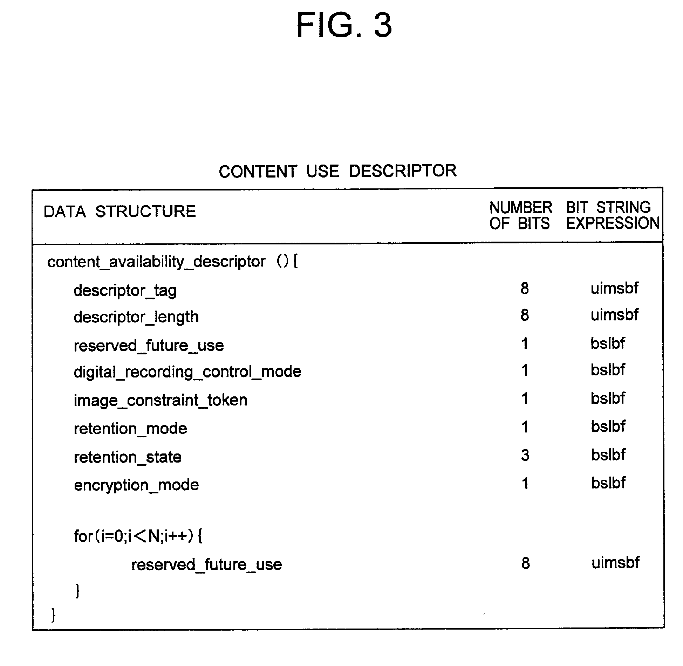

FIG. 3 shows an example of a structure of the content use descriptor which is one type of content control information. For example, the content use descriptor is information that is generated/added by the management information addition unit 16, and transmitted in a form of being contained in PSI (Program Specific Information) (e.g. PMT (Program Map Table) and the like) or SI (Service Information) (e.g. EIT (Event Information Table), SDT (Service Description Table), and the like) of MPEG-TS.

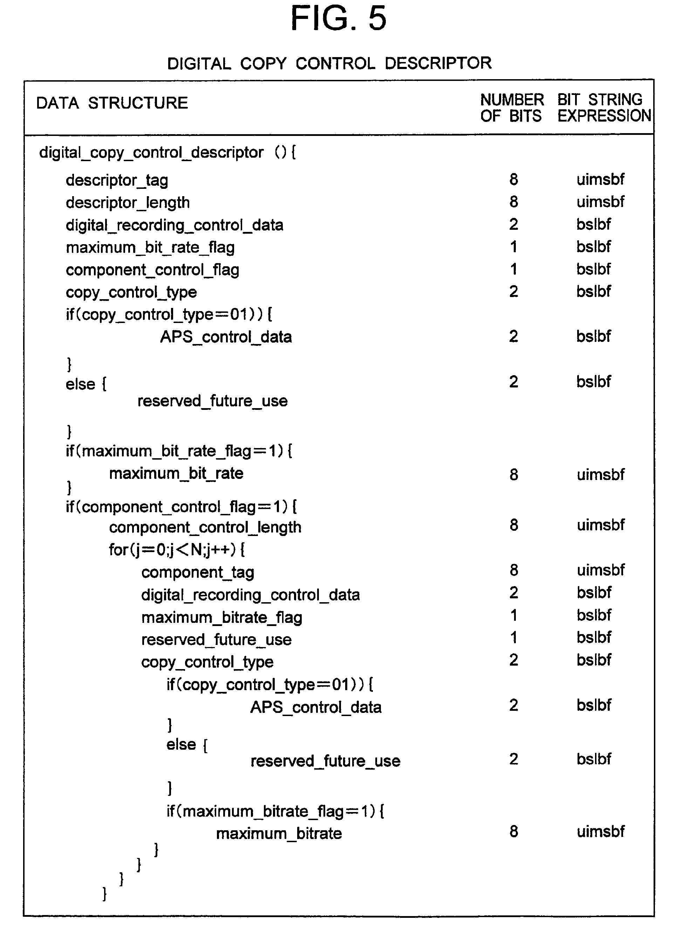

The content use descriptor is provided (transmitted) to describe control information about storage (recording) or output of the program. The content use descriptor has the following meanings. When a 1-bit field of digital_recording_control_mode (digital copy mode bit) is "1", it indicates that the program can be recorded as "limited-number copyable" even if digital_recording_control_data of the digital copy control descriptor shown in FIG. 5 is "one-generation copyable". When the 1-bit field of digital_recording_control_mode is "0", it indicates that the program cannot be recorded as "limited-number copyable".

Note that the content use descriptor is always provided (transmitted) in the case where the program is subject to output protection. The output protection means that high-speed digital interface output of content that is "freely copyable" is protected with reference to an output protection bit (encryption_mode) of the content use descriptor. In other words, though encryption is performed when outputting from a digital interface or copying to a recording medium, no limitations are imposed on copy generations and the number of copies. Retransmission to the Internet is virtually impossible. This is also referred to as "copy free with output protection" or EPN (encryption plus non-assertion).

Moreover, the content use descriptor is always provided (transmitted) in the case where the digital copy control information of the program is "one-generation copyable" and also the program is not subject to "limited-number copyable".

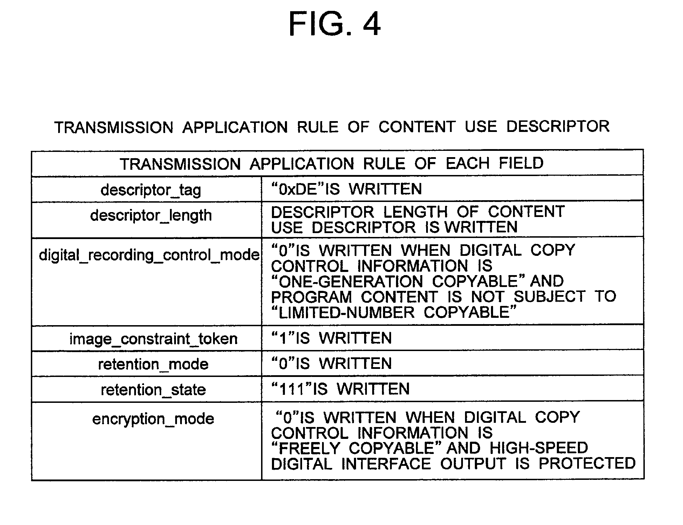

FIG. 4 shows a description example of each field of the content use descriptor.

"0xDE" indicating the content use descriptor is written in "descriptor_tag". A descriptor length of the content use descriptor is written in "descriptor_length". "0" is written in "digital_recording_control_mode", when the digital copy control information is "one-generation copyable" and also the program is not subject to "limited-number copyable". "1" is written in "digital_recording_control_mode", when the digital copy control information is "one-generation copyable" and also the program is subject to "limited-number copyable".

"0" is written in "encryption_mode", when the digital copy control information is "freely copyable" and also the high-speed digital interface output is protected.

"retention_mode" denotes a temporary storage control bit. "0" is written in "retention_mode", indicating that temporary storage is possible even when "digital_recording_control_data" (digital copy control information) of the digital copy control descriptor is "copy prohibited". "retention_state" denotes a temporary storage permissible time. "111" is written in "retention_state", indicating that storage for 1 hour and 30 minutes is possible. Note that "image_constraint_token", "retention_state", and "encryption_mode" are "1" by default.

The number of copies of content which is "limited-number copyable" is limited to no more than 10 in total, including both the copy source and the copy destination. In the case where there is a function of recording on a removable recording medium or a function of moving via high-speed digital interface output, the number of copies is limited including these functions. In detail, for example the content in the copy source and the copy destination is limited in the number of copies or prohibited from copying (recopy prohibited) except for analog video/audio output and digital audio output. The content in the copy source or the copy destination can be moved within the above-mentioned limitation.

Note that information used solely for the purpose of content management, such as a thumbnail, is not included as a copy.

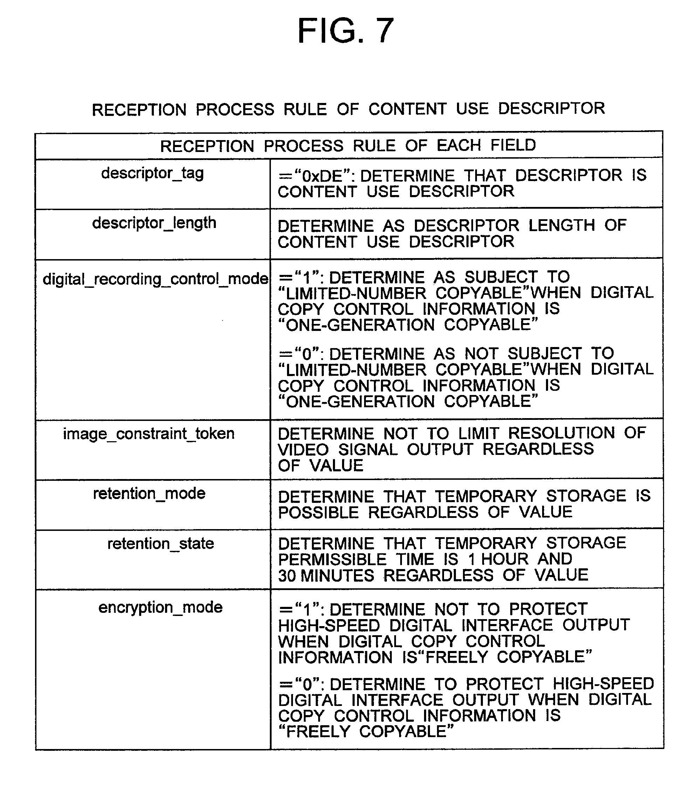

Each field will also be described later in FIG. 7 with regard to a process on the receiver side.

FIG. 5 shows an example of a structure of the digital copy control descriptor which is one type of copy control information. For example, the digital copy control descriptor is information that is generated/added by the management information addition unit 16, and transmitted in a form of being contained in PSI (e.g. PMT and the like) or SI (e.g. EIT, SDT, and the like) of MPEG-TS.

The digital copy control descriptor represents information for controlling copy generations, by a 2-bit field of "digital_recording_control_data" (digital copy control information).

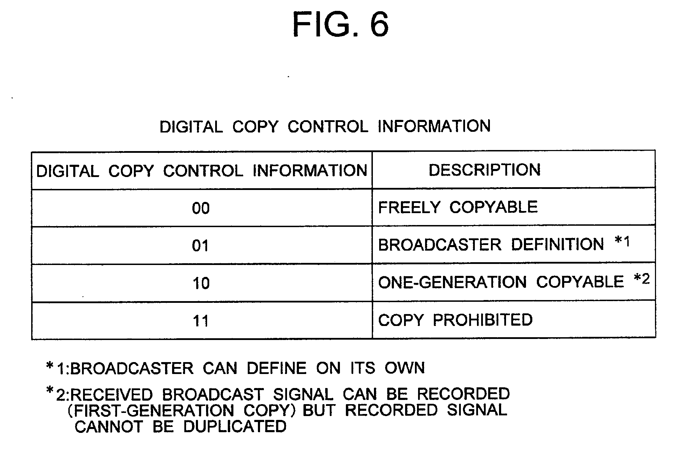

FIG. 6 shows an example of the digital copy control information. When the digital copy control information is "00", it indicates freely copyable. When the digital copy control information is "01", it indicates definition by a broadcaster. When the digital copy control information is "10", it indicates one-generation copyable. When the digital copy control information is "11", it indicates copy prohibited. Note that one-generation copyable means that a received broadcast signal can be recorded (first-generation copy) but, after recorded, cannot be duplicated (copied).

The content use descriptor shown in FIGS. 3 and 4 is also referred to as copy number limitation information, and the digital copy control information shown in FIGS. 5 and 6 is also referred to as copy generation limitation information.

### <Reception Apparatus>

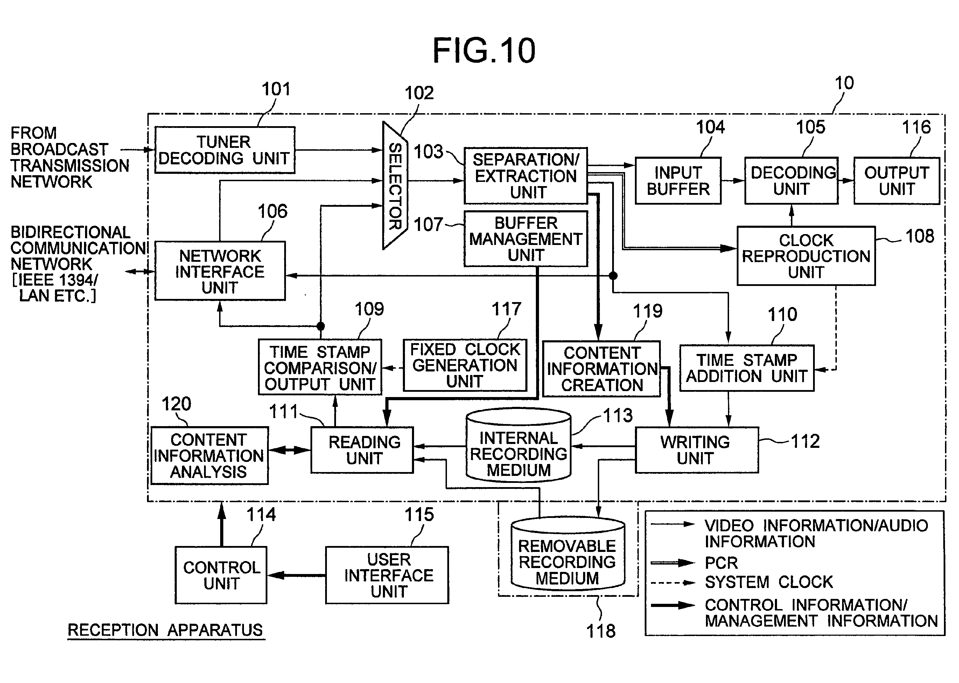

FIG. 10 is a block diagram showing an example of a structure of the reception apparatus 3 in the system shown in FIG. 1. In FIG. 10, there is no contact in a part where lines showing flows of information, PCR, and the like intersect each other, but there is contact and a branch occurs in a part marked with a black circle.

The reception apparatus 3 is a reception apparatus that receives digital broadcasts or IP (Internet Protocol) broadcasts transmitted via a network, and performs recording and reproduction. The following describes the case of handling a signal which is encoded by MPEG (Moving Picture Experts Group) as an image compression technique and multiplexed according to MPEG2-TS.

The reception apparatus 3 includes a reception/recording/reproduction unit 10, a control unit 114 (e.g. a CPU (Central Processing Unit)), and a user interface unit 115 (e.g. an input device such as a keyboard, a mouse, and a remote control).

Though this structural example shows each unit as a hardware component, part of the structure may instead be realized by software. Moreover, this may be applied to transmission/reception of video content, audio content, and the like to specific users by VOD (Video On Demand), download, and so on via a network. These are collectively referred to as distribution.

The control unit 114 is connected to each unit (including the reception/recording/reproduction unit 10) of the reception apparatus by a bus unit, and controls an operation of the entire reception apparatus. The control unit 114 also receives various instruction signals from the user via the remote control or the like of the user interface unit 115 and controls each unit connected via the bus unit on the basis of the instruction signals, thereby executing various processes.

The reception/recording/reproduction unit 10 includes a tuner decoding unit 101, a selector 102, a separation/extraction unit 103 (e.g. a demultiplexer), an input buffer 104, a decoding unit 105 (e.g. an MPEG decoder), a network interface unit 106, a buffer management unit 107, a clock reproduction unit 108, a time stamp comparison/output unit 109, a time stamp addition unit 110, a reading unit 111, a writing unit 112, an internal recording medium 113, an output unit 116, a fixed clock generation unit 117 (e.g. a crystal oscillator), a content management information creation unit 119, and a content management information analysis unit 120.

The internal recording medium 113 (also referred to as a first recording medium) and a removable recording medium 118 (also referred to as a second recording medium) are randomly accessible media such as a hard disk drive (HDD), a semiconductor memory, a magnetic disk, an optical disc, a magnetooptical disc, and the like.

The output unit 116 is a display unit using a CRT (Cathode Ray Tube), an LCD (Liquid Crystal Display), a PDP (Plasma Display Panel), or the like, an audio output unit using a speaker or the like, or a composite video output terminal, an S video output terminal (S terminal), a D video output terminal (D terminal) (these are analog video output terminals), an HDMI (High Definition Multimedia Interface) output terminal (digital video output terminal), an optical audio output terminal (digital audio output terminal), and so on for outputting analog or digital video/audio data to another display device or the like. The output unit 116 reproduces decoded video/audio in the display unit/audio output unit which is an output device. Alternatively, the output unit 116 outputs video/audio content data and the like to another display device/audio reproduction device via an output terminal (e.g. HDMI). Since the video/audio content data is outputted from the output terminal in a form based on a content protection scheme of the corresponding output standard, the content can be protected.

The tuner decoding unit 101 receives a digital broadcast signal transmitted from the transmission apparatus 1 via a broadcast transmission network such as a wireless network (satellite, terrestrial) or a cable. The tuner decoding unit 101 performs station selection and detection to a frequency of a physical or virtual channel designated via a user operation unit such as the remote control of the user interface unit 115 and the control unit 114. The tuner decoding unit 101 also outputs MPEG2-TS (transport stream) on which digital demodulation and error correction have been conducted, to the selector 102.

The selector 102 performs a 3-input 1-output selection process under control by the control unit 114, and outputs an output of the selection process to the separation/extraction unit 103.

The separation/extraction unit 103 separates/extracts, from the input MPEG2-TS, a transport packet of the channel (program) designated via the user operation unit such as the remote control of the user interface unit 115 and the control unit 114, and outputs the separated/extracted transport packet to the time stamp addition unit 110 and the network interface unit 106. The separation/extraction unit 103 also separates/extracts, from the transport packet of the channel (program) designated via the user operation unit such as the remote control of the user interface unit 115 and the control unit 114, a PES (Packetized Elementary Stream) or ES (Elementary Stream) of video and audio, and outputs the PES or the ES to the input buffer 104.

The ES is each of compressed/encoded image and audio data. The PES is an outcome of dividing and packetizing an image ES or an audio ES into an appropriate size. The separation/extraction unit 103 further extracts a PCR (Program Clock Reference) from the transport packet of the channel (program) designated via the user operation unit such as the remote control of the user interface unit 115 and the control unit 114, and outputs the PCR to the clock reproduction unit 108.

The separation/extraction unit 103 detects, from the transport packet of the channel (program) designated via the user operation unit such as the remote control of the user interface unit 115 and the control unit 114, start/end date and time of a title or program of the channel (program) recorded on the internal recording medium 113 or the removable recording medium 118, copy generation control information, and information showing permission status of a plurality of copies. The separation/extraction unit 103 further creates a data encryption key, and outputs the detected information and the created encryption key to the content management information creation unit 119. For example, the start/end date and time of the title or program, the copy generation control information, and the information showing permission status of a plurality of copies are transmitted from the transmission apparatus 1 in a form of being contained in PSI or SI of MPEG-TS.

The input buffer 104 temporarily stores the PES or ES of video/audio from the separation/extraction unit 103. The decoding unit 105 compares a DTS (Decoding Time Stamp)/PTS (Presentation Time Stamp) corresponding to the PES or ES stored in the input buffer 104 with an STC (System Time Clock) count from the clock reproduction unit 108 in order to specify decoding/presentation timings, extracts and decodes the PES or ES of video/audio stored in the input buffer 104 according to the decoding/presentation timings, and outputs the decoded video/audio to the output unit 116.

The buffer management unit 107 monitors the amount of transport packets in the input buffer 104 which have not been processed by the decoding unit 105, and controls the reading unit 111 to start and stop reading in accordance with the amount.

The clock reproduction unit 108 uses the PCR to reproduce the receiver's system clock in agreement with a frequency of a system clock of an encoding/multiplexing unit of the transmission apparatus 1 not illustrated, as an example. The clock reproduction unit 108 outputs the reproduced system clock to an STC counter in the clock reproduction unit 108, the time stamp addition unit 110, and the like. The clock reproduction unit 108 also outputs the STC count of the STC counter which operates according to the reproduced system clock, to the decoding unit 105.

The time stamp addition unit 110 generates a time stamp by a counter which operates according to, for example, the system clock reproduced by the clock reproduction unit 108 or a crystal oscillator not illustrated, adds the time stamp to each transport packet separated/extracted by the separation/extraction unit 103, and outputs the resulting transport packet to the writing unit 112.

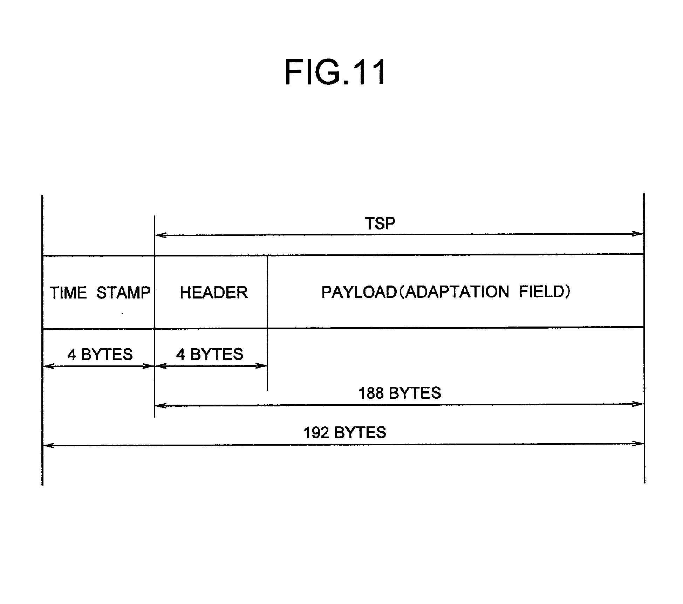

FIG. 11 shows an example of a structure of a transport packet to which a time stamp is added. A transport packet (TSP) of 188 bytes in length in MPEG has a 4-byte time stamp (for example, a time at which the receiver receives the transport packet) added to the beginning, resulting in a packet of 192 bytes in length. The time stamp holds time stamp information of the time of arrival of the transport packet. The TS in MPEG is made up of a 4-byte header at the beginning and a 184-byte payload (or an adaptation field) which follows.

The content management information creation unit (content information creation unit) 119 creates management information on the basis of the start/end date and time of the title or program, the copy generation control information, the copy number control information (showing whether or not a plurality of copies are permitted), and the key information received from the separation/extraction unit 103, and outputs the management information to the writing unit 112. Regarding the copy generation control information and the copy number control information, the content use descriptor and the digital copy control descriptor shown in FIGS. 3 to 6 which are received from the transmitter 1 may be directly used as the management information, or new information may be created on the basis of the content use descriptor and the digital copy control descriptor.

The writing unit 112 performs a process of recording the management information created by the content management information creation unit 119 and encrypted data obtained by encrypting the transport packet to which the time stamp is added by the time stamp addition unit 110 on the basis of the key information in the management information, on the internal recording medium 113 or the removable recording medium 118. As a result, one stream including encrypted data obtained by encrypting transport packets which contain video/audio data of one channel (in other words, program content or downloaded content) and to which time stamps are added is stored on the internal recording medium 113 or the removable recording medium 118 as one data file or two or more fragmented data files generated by dividing the data file.

Note that a time stamp can be regarded as time information relating to a temporal position of a transport packet to which the stamp is added. For instance, the time stamp may be a time at which the transport packet from the separation/extraction unit 103 is input to the time stamp addition unit 110, or a time difference from a reference transport packet (for example, an immediately preceding transport packet or a top transport packet). As mentioned above, this time stamp is different from a time stamp (such as a PCR, a DTS, or a PTS) included in the transport packet beforehand.

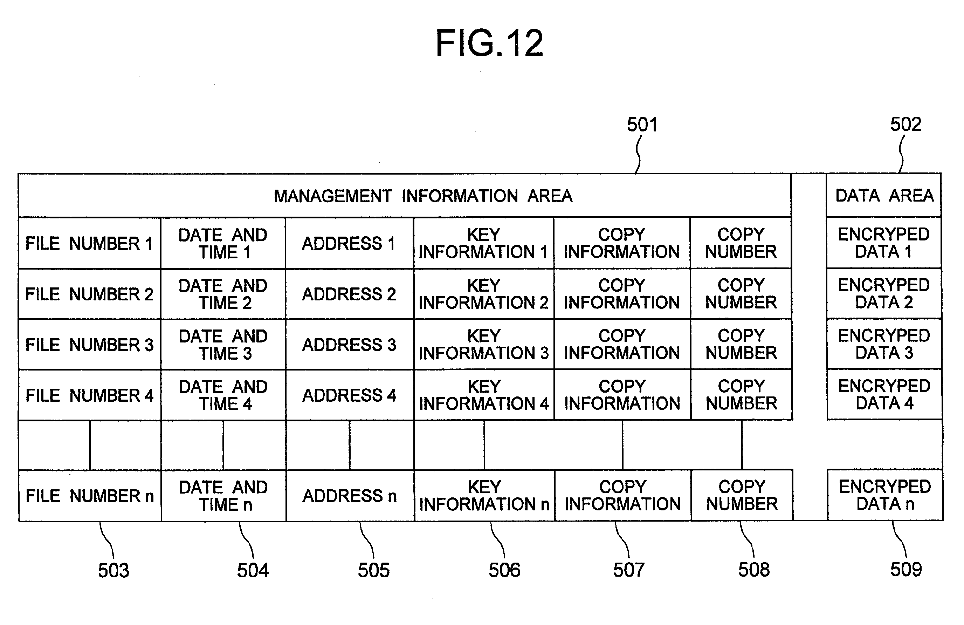

FIG. 12 shows an example of recording program content on the internal recording medium 113 or the removable recording medium 118.

For each set of program content, management information indicating the contents of the program content and data (such as video/audio) which is substance of the program content are recorded in a management information area 501 and a data area 502, respectively. For example, a file number 503 showing a title of the program content, a date and time 504 showing start/end date and time of the program, a data area start address and recording size 505, copy information 507, copy number 508, key information 506, and the like are recorded as the management information. The program content is written in the data area 502 from an address corresponding to the start address 505 recorded in the management information area 501. Each time program content is newly recorded, management information and program content are recorded sequentially, such as a file number 1, a file number 2, ... , a file number n.

The copy information 507 is the copy generation control information included in the management information created by the content management information creation unit 119. As one example, a 2-bit signal can be used to designate:
00 = copyable (Copy Free)
10 = one-generation recording permitted (Copy One Generation)
11 = copy prohibited (Copy Never).

In this case, for program content recorded as "Copy One Generation", the reception apparatus 3 defines 01 = any further copying of the content which is copied once with "Copy One Generation" is prohibited (No More Copies). The manner of designation may be the same as the digital copy control information shown in FIG. 6, or may be unique to the reception apparatus 3.

The copy number 508 is the copy number control information included in the management information created by the content management information creation unit 119. The copy number 508 is information created on the basis of the copy generation control information and the information showing permission status of a plurality of copies, which the content management information creation unit 119 receives from the separation/extraction unit 103. When the copy generation control information is one-generation recording permitted (Copy One Generation) and the information showing permission status of a plurality of copies is "permitted", the program content is recorded as "No More Copies", information showing the number of permitted copies is stored for making the content copyable on a same or different recording media in a same or different formats, and for example "9" indicating that 9 copies are permitted is input. This number may be in conformity with standards or the like. On the other hand, when the copy generation control information is one-generation recording permitted (Copy One Generation) and the information showing permission status of a plurality of copies is "not permitted", the program content is recorded as "No More Copies", and "0" (indicating that copying is not permitted) is input as information showing the number of permitted copies to make the content not copyable.

Note that the data which is the substance of the program content of "Copy One Generation" recorded as "No More Copies", that is, the copy generation control information and the information showing permission status of a plurality of copies stored in the PSI or SI of MPEG-TS and transmitted from the transmission apparatus 1, are unchanged.

Moreover, for example encryption is performed on the copy information 507, the copy number 508, and the key information 506 to prevent unauthorized tampering.

Back to the description of FIG. 10, the content management information analysis unit 120 reads the management information stored on the internal recording medium 113 or the removable recording medium 118 via the reading unit 111, and analyzes the contents of the management information. The content management information analysis unit 120 passes the start/end date and time of the title or program of the program content, the copy information, the copy number, and the like to the control unit 114 so that the program content can be selected via the user operation unit such as the remote control of the user interface unit 115 and the control unit 114 when reproducing, copying, or moving the program content stored on the internal recording medium 113 or the removable recording medium 118. The content management information analysis unit 120 also passes the key information for decrypting the encrypted data, to the reading unit 111.

The reading unit 111, under control by the buffer management unit 107 or the control unit 114, reads the management information from the internal recording medium 113 or the removable recording medium 118, outputs the management information to the content management information analysis unit 120, sequentially reads the encrypted data from the internal recording medium 113 or the removable recording medium 118, and outputs a transport packet additionally having a time stamp obtained by decrypting the encrypted data on the basis of the key information passed from the content management information analysis unit 120, to the time stamp comparison/output unit 109.

The time stamp comparison/output unit 109 compares the time stamp added to the transport packet read by the reading unit 111, with a count of a counter that operates on the basis of the fixed clock generation unit 117 such as a crystal oscillator. When they match, the time stamp comparison/output unit 109 deletes (removes) the time stamp from the transport packet, and outputs the transport packet to the selector 102 and the network interface unit 106. In the case where the buffer management unit 107 monitors the remaining amount of the input buffer 104 and controls the reading unit 111 in accordance with the amount as mentioned above, the time stamp comparison/output unit 109 may delete the time stamp from the transport packet and output the transport packet to the selector 102 and the network interface unit 106, without comparing the time stamp with the count. Particularly in reproduction other than normal reproduction (single-speed reproduction), this output method is preferable.

The network interface unit 106 is connected to another apparatus (such as a recorder, a display, or a personal computer at home, or a server outside home) which is the output destination/input source, via a line (such as an IEEE 1394 cable, a LAN cable, or wireless). The network interface unit 106 receives the transport packet of video/audio or the like from which the time stamp is deleted by the time stamp comparison/output unit 109 or the transport packet separated/extracted by the separation/extraction unit 103, converts the transport packet to a form in conformity with corresponding transmission standards, and outputs the video/audio data stored on the internal recording medium 113 or the removable recording medium 118 or the video/audio data of the digital broadcast signal received by the tuner decoding unit 101, to another apparatus which is the output destination via the line. The network interface unit 106 also receives an input of data such as video/audio from another apparatus which is the input source via the line in a form in conformity with corresponding transmission standards, converts it to a transport packet, and outputs the transport packet to the selector 102. Note that there may be a plurality of network interface units 106.

### <Reception and Recording Process relating to Copy Control Information>

A detailed example of the process of the reception apparatus 3 relating to the copy control information shown in FIGS. 3 to 6 transmitted from the transmission apparatus 1 is described below.

FIG. 7 shows an example of a process for each field of the content use descriptor in the reception apparatus 3.

When "descriptor_tag" is "0xDE", the reception apparatus 3 determines that the descriptor is the content use descriptor. From "descriptor_length", the reception apparatus 3 determines the descriptor length of the content use descriptor. When "digital_recording_control_mode" is "1", the reception apparatus 3 determines that the program content is subject to "limited-number copyable" in the case where the digital copy control information is "one-generation copyable". When "digital_recording_control_mode" is "0", the reception apparatus 3 determines that the program content is not subject to "limited-number copyable" in the case where the digital copy control information is "one-generation copyable". For any value of "image_constraint_token", the reception apparatus 3 determines that a resolution of video signal output is not limited. For any value of "retention_mode", the reception apparatus 3 determines that temporary storage is possible. For any value of "retention_state", the reception apparatus 3 determines that a temporary storage permissible time is 1 hour and 30 minutes. When "encryption_mode" is "1", the reception apparatus 3 determines that high-speed digital interface output is not protected in the case where the digital copy control information is "freely copyable". When "encryption_mode" is "0", the reception apparatus 3 determines that high-speed digital interface output is protected in the case where the digital copy control information is "freely copyable".

Note that if the content use descriptor is not provided (transmitted) for some reason, the reception apparatus 3 may interpret each field as follows: digital_recording_control_mode = "1", image_constraint_token = "1", retention_mode = "0", retention_state = "111", encryption_mode = "1".

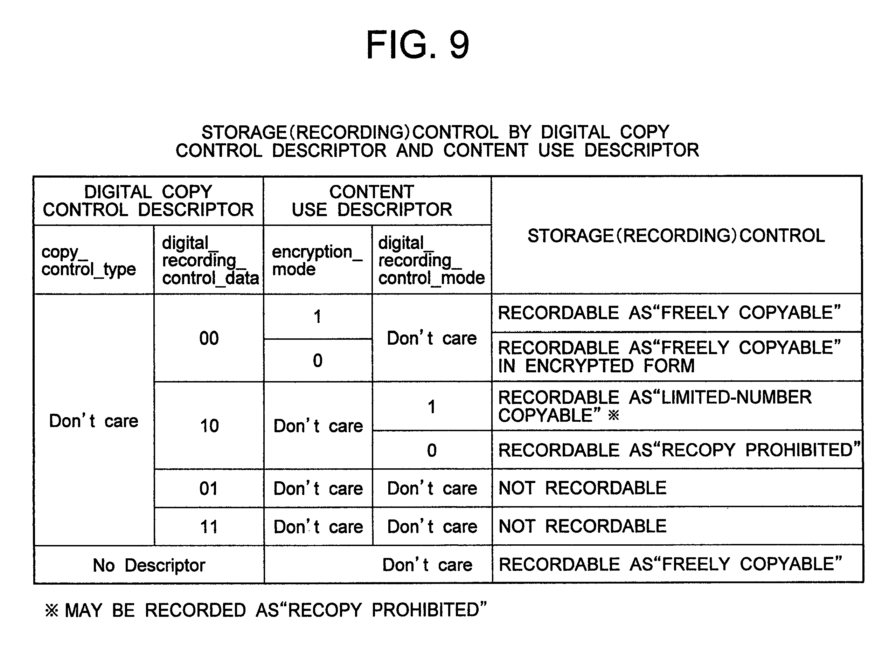

FIG. 9 shows an example of control whereby the reception apparatus 3 stores (records) the program content using the copy control information.

In FIG. 9, when storing the program content, for example in the case where digital_recording_control_data of the digital copy control descriptor is "10" indicating "one-generation copyable", the copy control information on the recording medium is stored as "recopy prohibited". However, when digital_recording_control_mode is "1", the copy control information is stored as "limited-number copyable". Note that even when storing as "recopy prohibited", the value of digital_recording_control_data of the digital copy control descriptor does not need to be changed.

In the case where digital_recording_control_data of the digital copy control descriptor is "10" indicating "one-generation copyable", creation of a plurality of copies is not permitted. This, however, excludes the storage to an area that is inaccessible by the user for backup. It is assumed here that the above-mentioned limitation is imposed for each broadcast reception unit and, when there are a plurality of broadcast reception units, the above-mentioned limitation is imposed for each of the plurality of broadcast reception units.

Regarding "limited-number copyable", N copies can be created from program content stored as "limited-number copyable". For example, the value of N may be in conformity with standards. When creating a copy via high-speed digital interface output, copying may be performed in the case where the number of created copies can be determined for example by using a move function. One example of this is the case where the interface is IEEE 1394 and the output destination can be recognized to be an apparatus in conformity with DTCP standards. Note that the created copy is set in a "recopy prohibited" state or its equivalent state.

When reproducing and outputting program content stored as "limited-number copyable", in a high-speed digital interface, the output is performed after a process of "No More Copies" specified in DTCP (Digital Transmission Content Protection). In the case of analog video output and digital audio output, the program content can be output as "one-generation copyable".

The number of copies of content which is "limited-number copyable" is limited to no more than 10 in total, including both the copy source and the copy destination. In the case where there is a function of recording on a removable recording medium or a function of moving via high-speed digital interface output, the number of copies is limited including these functions. In detail, for example the content in the copy source and the copy destination is limited in the number of copies or prohibited from copying (recopy prohibited) except for analog video/audio output and digital audio output. The content in the copy source or the copy destination can be moved within the above-mentioned limitation.

Regarding content recorded (stored) as "limited-number copyable", up to 9 copies can be created for digital recording (copying) to a recording medium and copying via high-speed digital interface output, apart from the original recorded (stored) content. This, however, excludes the case of, upon or after recording, recording (storing) to an area that is inaccessible by the user for backup. The original content after the specified number (9) of copies are created can be moved in the same way as content which is "recopy prohibited".

Moreover, it is also possible to move content managed as "limited-number copyable" to an internal recording medium or a digitally-connected recording medium, while maintaining the managed number of copies. In such a case, it is ensured that the total number of copies is unchanged before and after movement.

The management of the number of copies when copying content which is "limited-number copyable" to the internal recording medium and copying the content via the high-speed digital interface is equivalent to the case where there are 10 sets of content that are movable. Regarding analog video output and digital audio output, the output can be performed as "one-generation copyable", and is not included in the limitation of the number of copies.

As to the recording on the removable recording medium, if the management of the number of copies is possible in the same way as described above, the content can be recorded in the state of "limited-number copyable". However, in the case of simultaneously recording the content on the removable recording medium and a storage medium or on a plurality of removable recording media, shared management is conducted so that the total number of copies permitted for the removable recording medium and the storage medium or for the plurality of removable recording media is not exceeded for each broadcast reception unit.

To move while maintaining the number of copies of content which is "limited-number copyable" is to move all or part of the copies managed in the move source. In such a case, it is ensured that the total number of copies is unchanged before and after movement. In detail, when the number of permitted copies of the content before movement is m and n copies out of the permitted copies are moved, the number of permitted copies of the content in the move source is (m - n), and the number of permitted copies of the content in the move destination is (n - 1).

Note that information used solely for the purpose of content management, such as a thumbnail, is not included as a copy. Examples of information used for the purpose of content management include information using audio information and information using subtitle information, in addition to a thumbnail created from video information.

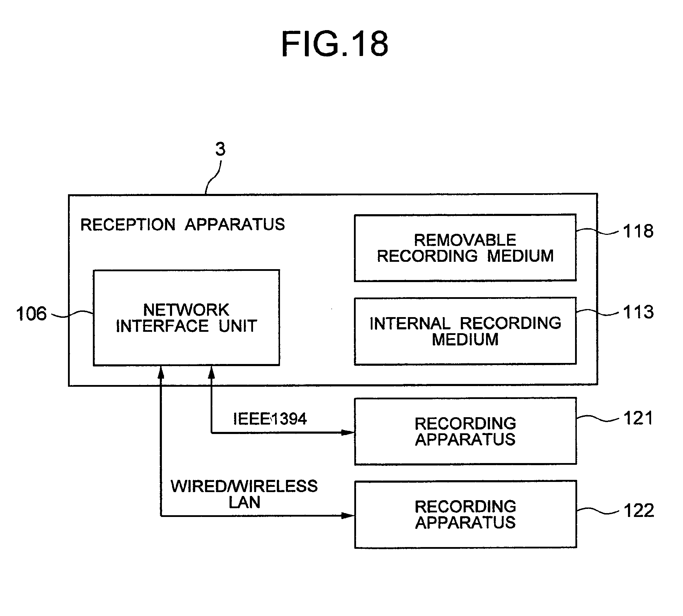

FIG. 18 is a view for understanding of the above-mentioned limitation on the number of copies, and shows the reception apparatus 3, the network interface unit 106, the internal recording medium 113, the removable recording medium 118, a recording apparatus 121, and a recording apparatus 122. For example, the recording apparatus 121 is connected to the network interface unit 106 via IEEE 1394, where DTCP is used as a copyright protection scheme. For example, the recording apparatus 122 is connected to the network interface unit 106 via a wired LAN or a wireless LAN, where DTCP-IP (Digital Transmission Content Protection over Internet Protocol) is used as a copyright protection scheme. In the case of such connection state as an example, content which is "limited-number copyable" received from a broadcast wave needs to be limited to 10 in total number on the internal recording medium 113, the removable recording medium 118, the recording apparatus 121, and the recording apparatus 122.

In this case, for example, four sets of content in a copyable state are present on the internal recording medium 113, two sets of content in a copyable state are present on the removable recording medium 118, one set of content is present on the recording apparatus 121, and one set of content is present on the recording apparatus 122. When receiving the broadcast wave and recording the content, the content may be simultaneously recorded on the internal recording medium 113, the removable recording medium 118, the recording apparatus 121, and the recording apparatus 122 to the above-mentioned numbers, or the content may be initially recorded only on the internal recording medium 113 and later copied to the removable recording medium 118, the recording apparatus 121, and the recording apparatus 122.

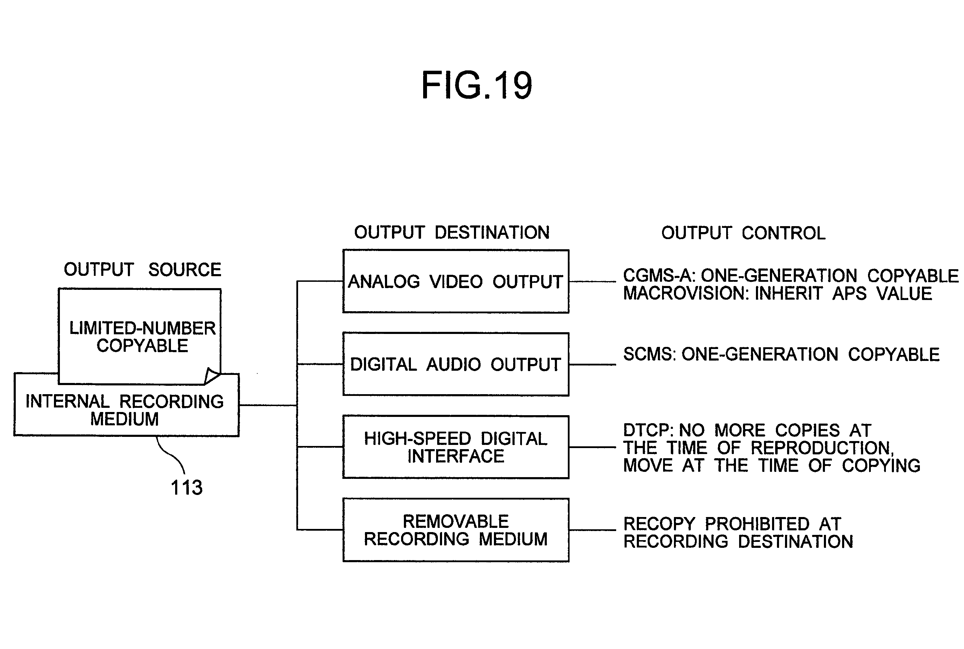

FIG. 19 is a view for understanding of a substitute output destination of the above-mentioned content stored as "limited-number copyable" and copy control for the content. For example, the output source is the internal recording medium 113 in the reception/recording/reproduction unit 10, and the analog video output (such as the composite video output terminal, the S terminal, and the D terminal) in the output unit 116 uses CGMS-A (Copy Generation Management System - Analog) and Macrovision as copy control, where the control of CGMS-A is "one-generation copyable" and the control of Macrovision inherits the value of APS (Analog Protection System). The digital audio output (such as the optical audio output terminal) uses SCMS (Serial Copy Management System) as copy control, where the control of SCMS is "one-generation copyable". The high-speed digital interface (such as the IEEE 1394 terminal) in the network interface unit 106 uses DTCP (Digital Transmission Content Protection) as copy control, where the control of DTCP is "No more copies" at the time of reproduction and "Move" at the time of copying. In the removable recording medium 118, copy control of prohibiting recopying at the recording destination is performed.

By performing appropriate copy control according to different output destinations in this way, when receiving a broadcast wave and recording a program, a plurality of the same program can be recorded on a plurality of recording media or recording apparatuses. This has an advantage of protecting content while ensuring user friendliness.

Note that the above describes the case where the recording apparatuses 121 and 122 are connected via IEEE 1394 and LAN respectively, but the connection is not necessarily limited to IEEE 1394 or LAN, and other connection methods may instead be used.

When the recording medium is the removable recording medium, there is another limitation in addition to those shown in FIG. 9. Regarding digital recording of program content on the removable recording medium, in digital recording of TV or data services or digital recording of audio services, when receiving and recording program content whose digital copy control descriptor has digital_recording_control_data = "10" indicating "one-generation copyable", 3 or more copies of the received content are not permitted even in the case of the first generation content (for example, when receiving and recording the broadcast, the content cannot be simultaneously recorded on 3 or more recording media). This value (3 or more is used as an example) may be in conformity with standards. Moreover, creation of a plurality of one-generation copies of the same recording format is not permitted. This, however, excludes the digital recording to an area that is inaccessible by the user for backup. The recording limitation on the digital recording medium is imposed for each broadcast reception unit and, when there are a plurality of broadcast reception units, the limitation is imposed for each of the plurality of broadcast reception units. In the case where the reception apparatus has a recording system that does not support digital_recording_control_mode, program content whose digital copy control descriptor has copy_control_type = "01" and digital_recording_control_data = "10" is digitally recorded as "one-generation copyable", irrespective of the value of digital_recording_control_mode of the content use descriptor.

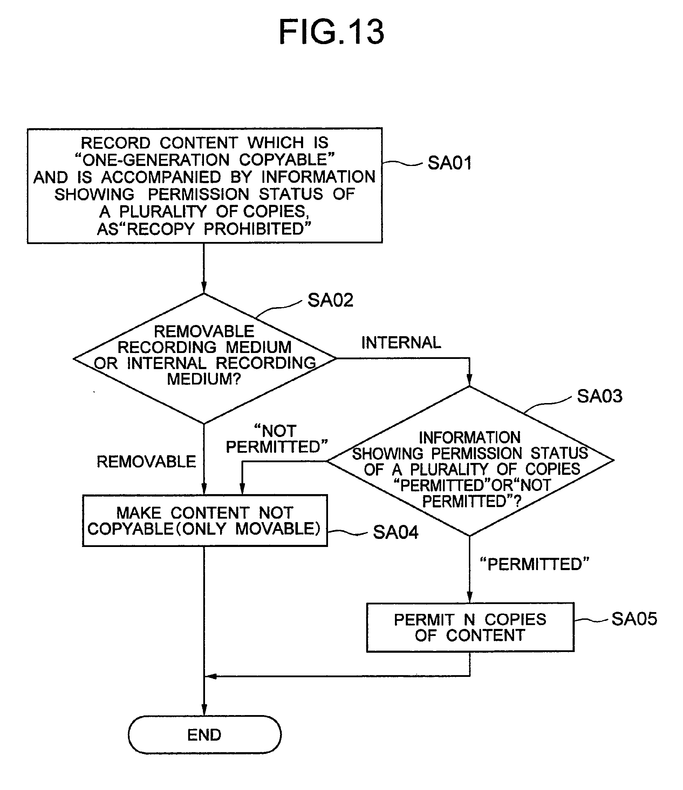

FIG. 13 is a flowchart showing an example of a procedure of creating copy information and copy number of management information when the reception apparatus 3 records program content for which one-generation copying is permitted (Copy One Generation).

From the copy generation control information and the information showing permission status of a plurality of copies received from the separation/extraction unit 103, the content management information creation unit 119 recognizes that the program content is "one-generation copying permitted (Copy One Generation)" and is accompanied by the information showing permission status of a plurality of copies, and inputs "01" to the copy information of the management information as no further copying is permitted, that is, "recopy prohibited (No More Copies)" (SA01).

For example, the control unit 114 notifies the content management information creation unit 119 whether the recording medium on which the program content is recorded is internal or removable (SA02).

When the recording medium is removable, for example "0" is input to the copy number of the management information, to set the program content in a state of being not copyable but movable (SA04). Note that the difference from the above-mentioned operation of not permitting 3 or more copies lies in that, while the above-mentioned operation is copy control when receiving and recording a broadcast (when creating the first-generation copy) as an example, FIG. 13 relates to copy control after the recording on the recording medium (after the first-generation copy is created).

When the recording medium is internal, the content management information creation unit 119 determines whether the information showing permission status of a plurality of copies is "permitted" or "not permitted" (SA03).

When "not permitted", for example "0" is input to the copy number of the management information, to set the program content in a state of being not copyable but movable (SA04). Deletion and the like are also possible.

When "permitted", "N" is input to the copy number of the management information, to set the program content in a state where N copies are permitted (SA05).

In this way, it becomes possible to make a plurality of copies of recorded program content for which one-generation copying is permitted (Copy One Generation), regardless of time. This has an advantage of improving usability. Furthermore, whether or not a plurality of copies are permitted is determined on the basis of whether or not the recording medium is internal or removable. When the recording medium is internal, the program content is locally encrypted and also the key information, the copy information, and the copy number in the management information are encrypted and managed as described above, thereby preventing unauthorized tampering. When the recording medium is removable, various management methods are available. There may be the case where unauthorized tampering cannot be prevented because the management is unable to be performed like the above-mentioned internal recording medium. In view of this, an advantage of protecting content while ensuring user friendliness can be attained.

### <Copy Process relating to Copy Control Information>

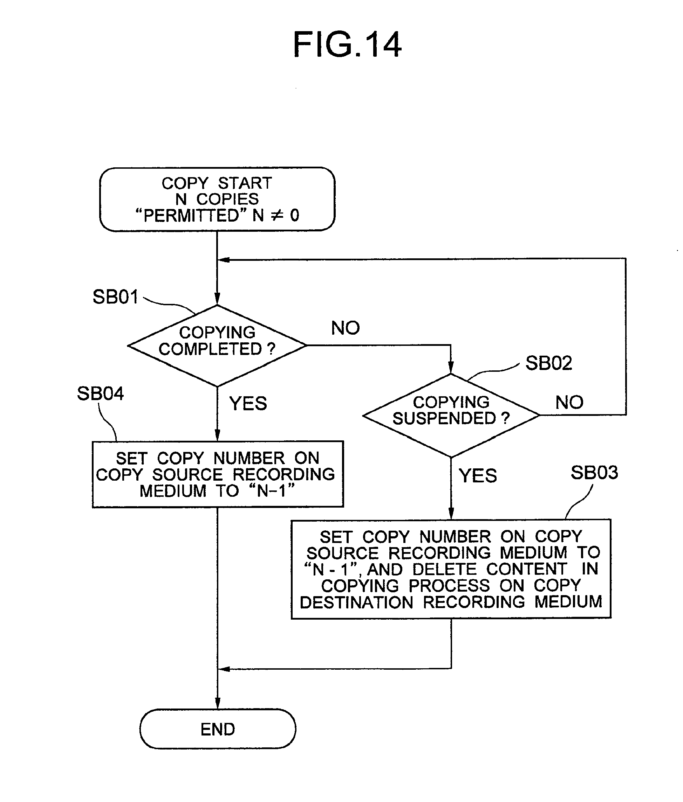

FIG. 14 is a flowchart showing an example of a procedure of copying program content by the reception apparatus 3.

When copying program content whose management information shows the copy information as "01" (No More Copies) and the copy number as "N" (N # 0), whether or not the copying is completed is monitored (SBO1).

When the copying is completed, "N - 1" (N ≠ 0) is input to the copy number of the management information on the copy source recording medium, to set the program content in a state where "N - 1" copies are permitted. In addition, "01" (No More Copies) is input to the copy information of the management information on the copy destination recording medium to set the program content in a recopy prohibited state, and "0" is input to the copy number of the management information on the copy destination recording medium to set the program content in a state of being not copyable but movable (SB04).

When the copying is not yet competed, whether or not the copying is suspended is monitored (SB02).

When the copying is not suspended, whether or not the copying is completed is monitored (SB01).

When the copying is suspended, "N - 1" (N ≠ 0) is input to the copy number of the management information on the copy source recording medium to set the program content in a state where "N - 1" copies are permitted, and the program content which is in the process of copying is deleted in the case where the copy destination recording medium is capable of recording a plurality of times (SB03). In the case where the recording medium is capable of recording only once, on the other hand, the program content cannot be deleted and so the deletion process is not executed.

By doing so, there is an advantage of reliably performing copy generation management of program content in the copy destination. In addition, even when the copying is suspended for some reason, unnecessary program content does not remain in the copy destination, which has an advantage of saving the trouble of deleting it later and therefore improving usability. Note that the above-mentioned deletion may be performed by physically deleting the data on the recording medium or by deleting the management information so that the data exists on the recording medium but cannot be reproduced (indirect deletion).

### <Move Process relating to Copy Control Information>

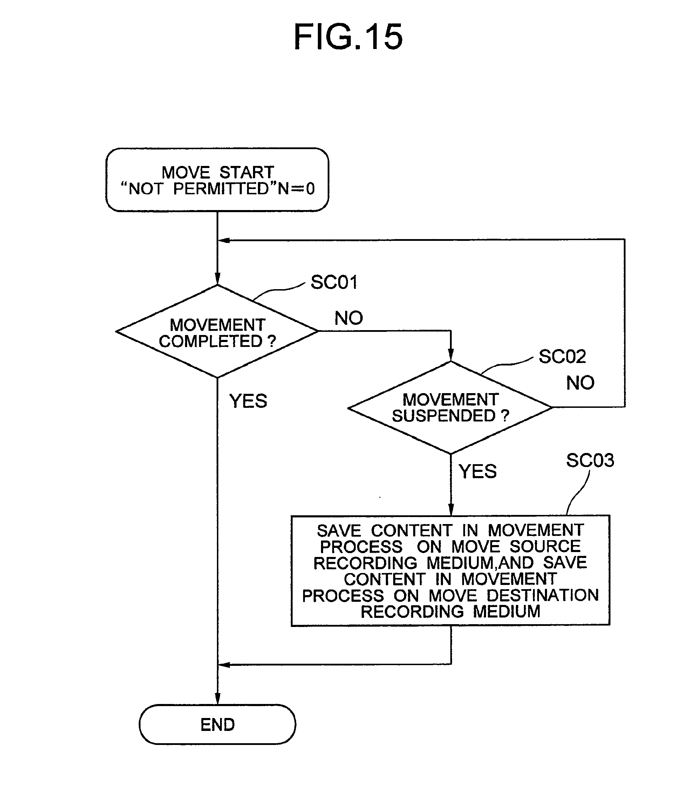

FIG. 15 is a flowchart showing a procedure of moving program content by the reception apparatus according to the embodiment.

When moving program content whose management information shows the copy information as "01" (No More Copies) and the copy number as "0", whether or not the movement is completed is monitored (SC01).

When the movement is completed, the program content and the management information about the program content on the move source recording medium are deleted, "01" (No More Copies) is input to the copy information of the management information on the move destination recording medium to set the program content in a recopy prohibited state, and "0" is input to the copy number of the management information on the move destination recording medium to set the program content in a state of being not copyable but movable.

When the movement is not yet completed, whether or not the movement is suspended is monitored (SC02).

When the movement is not suspended, whether or not the movement is completed is monitored (SC01).

When the movement is suspended, the part of the program content on the move source recording medium which is still not moved to the move destination recording medium and its related management information are saved, and the program content already moved to the move destination recording medium is made irreproducible. The program content in the process of movement on the move destination recording medium is saved, "01" (No More Copies) is input to the copy information of the management information to set the program content in a recopy prohibited state, and "0" is input to the copy number of the management information to set the program content in a state of being not copyable but movable (SC03).

By doing so, there is an advantage of reliably performing copy generation management of program content in the move destination. In addition, even when the movement is suspended for some reason, the program content is saved on each of the move source recording medium and the move destination recording medium, which prevents a situation where the program content cannot be viewed due to suspension. This produces an advantage of improving usability. Note that the above-mentioned deletion may be performed by physically deleting the data on the recording medium, or by deleting the management information so that the data exists on the recording medium but cannot be reproduced (indirect deletion).

Note that the above describes the case where the copy destination recording medium or the move destination recording medium is a recording medium capable of management as recopy prohibited (No More Copies). In the case where such management is impossible, the copy or move process is prohibited.

The above describes the case where program content is transmitted from the broadcast station, but the present invention is also applicable to program content transmitted from other than the broadcast station, such as from a program content provider.

The removable recording medium means a recording medium that has an independent form removable from the reception apparatus and is also reproducible by another apparatus having a reproduction function.

The movement means to move program content which is "recopy prohibited (No More Copies)" recorded on a recording medium, by copying the program content to another recording medium and then making the program content irreproducible. Making irreproducible means to disable the reproduction of the program content by, for example, deleting the program content itself or deleting its encryption key or management information. It is preferable to avoid a situation where program content exceeding 1 minute in length simultaneously exists in both the move source and the move destination in a reproducible state during movement.

The above describes the case where the determination as to whether or not a plurality of copies are permitted for program content which is "one-generation copyable (Copy One Generation)" and for which information showing permission status of a plurality of copies is "permitted" is made according to whether the recording medium is internal or removable. As an alternative, the determination to permit a plurality of copies may be made according to whether or not the recording medium is capable of managing a plurality of copies. For example, a recording medium capable of managing a plurality of copies is a recording medium that can perform management of preventing unauthorized tampering with the information including the copy information 507, the copy number 508, and the key information 506 (other information such as the file number 503, the date and time 504, the data area start address and recording size 505, and the like may also be included) in the management information indicating the contents of the program content as shown in FIG. 12 mentioned above.

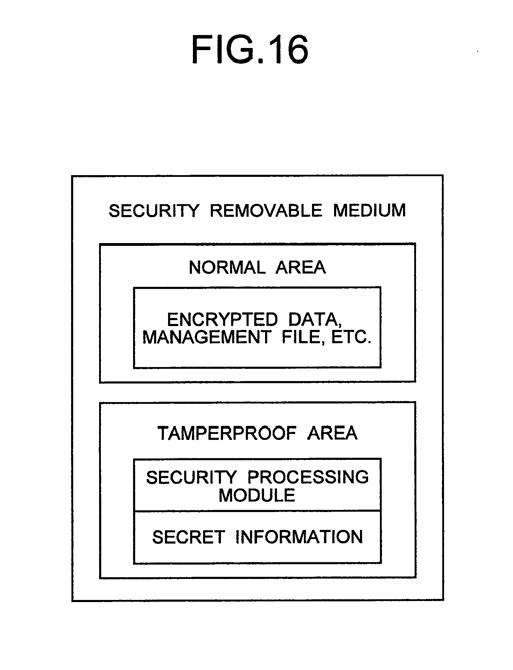

FIG. 16 shows an example of a structure of a recording medium (security removable medium) capable of such management of a plurality of copies (also referred to as copy number control or number control copy). This is a structure where a normal area accessible by the user and a tamperproof area not accessible by the user are included in one recording medium. Secret information stored in the tamperproof area can be accessed upon successful authentication as a result of an authentication process with an apparatus capable of handling the recording medium, to allow the secret information to be managed. Unauthorized tampering is prevented by storing and managing the above-mentioned information such as the copy information 507, the copy number 508, and the key information 506 in this tamperproof area.

On the other hand, a recording medium not capable of managing a plurality of copies is a recording medium that cannot perform management of preventing unauthorized tampering with the information including the copy information 507, the copy number 508, and the key information 506 (other information such as the file number 503, the date and time 504, the data area start address and recording size 505, and the like may also be included) in the management information indicating the contents of the program content.

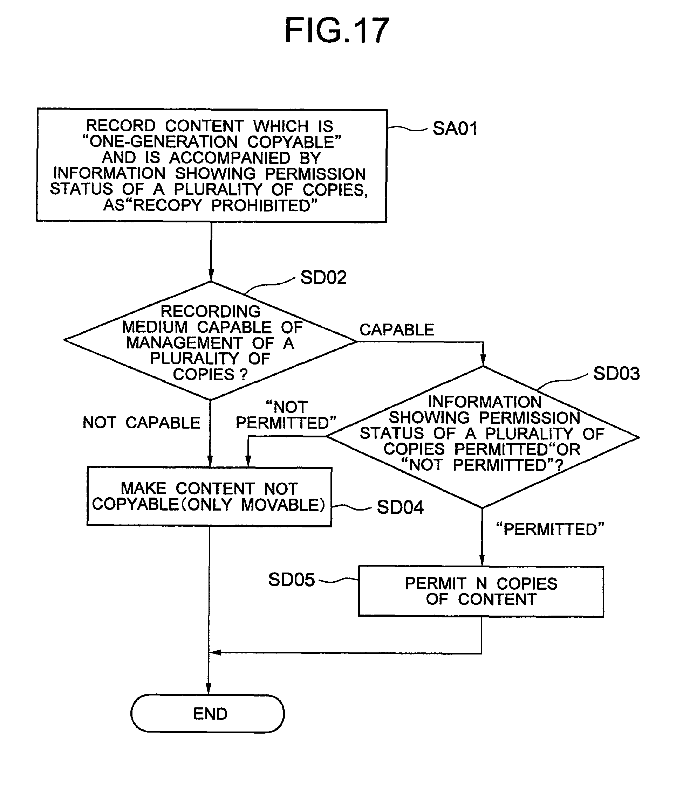

FIG. 17 is a flowchart showing an example of a procedure of creating copy information and copy number of management information when recording program content for which one-generation copying is permitted (Copy One Generation) in the reception apparatus, on the basis of whether or not the recording medium is capable of management of a plurality of copies. The difference from FIG. 13 lies in SD02. Note that this may be combined with FIG. 13, such as by executing SD02 when SA02 is "removable".

For example, whether the recording medium on which the program content is recorded is a recording medium capable of management of a plurality of copies or a recording medium not capable of management of a plurality of copies is determined by the control unit 114 and notified to the content management information creation unit 119 (SD02).

In the case of the recording medium not capable of management of a plurality of copies, for example "0" is input to the copy number of the management information, to set the program content in a state of being not copyable but movable (SD04).

In the case of the recording medium capable of management of a plurality of copies, the content management information creation unit 119 determines whether the information showing permission status of a plurality of copies is "permitted" or "not permitted" (SD03). When "not permitted", for example "0" is input to the copy number of the management information, to set the program content in a state of being not copyable but movable (SD04). When "permitted", "N" is input to the copy number of the management information to set the program content in a state where N copies are permitted (SD05).

In this way, it becomes possible to make a plurality of copies of recorded program content for which one-generation copying is permitted (Copy One Generation), regardless of time. This has an advantage of improving usability. Moreover, by determining whether or not a plurality of copies are permitted on the basis of whether or not the recording medium is capable of management of a plurality of copies, the permission of a plurality of copies to the recording medium which is not capable of management of a plurality of copies can be prevented, which has an advantage of protecting program content more reliably.

The above describes the case where, when the digital copy control information is "one-generation copyable", the program content is determined to be subject to "limited-number copyable" in the case where digital_recording_control_mode is "1", and not subject to "limited-number copyable" in the case where digital_recording_control_mode is "0". However, the determination on "0" and "1" may be reversed in accordance with, for example, the system of the broadcast station.

Which is to say, when the digital copy control information is "one-generation copyable", the program content may be determined to be subject to "limited-number copyable" in the case where digital_recording_control_mode is "0", and not subject to "limited-number copyable" in the case where digital_recording_control_mode is "1". Likewise, the meanings of the values shown by the other descriptors may be changed to different settings according to circumstances.

Moreover, it is desirable to uniquely define the meanings of the values of each descriptor such as digital_recording__control_mode, by standardization.

The names (such as digital_recording_control_mode and digital_recording_control_data) of the content use descriptor and the digital copy control descriptor need not necessarily be those used in the embodiment, and other names may instead be employed.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A copy control method in a reception apparatus (3) for receiving digital content and a plurality of types of copy control information for controlling copying of the digital content, and recording the digital content on a first recording medium and a second recording medium according to the plurality of types of copy control information, the copy control method being **characterized in that**
when first information in the received plurality of types of copy control information shows copy generation information permitting one-generation copying,
in a case where second information in the received plurality of types of copy control information shows limited-number copy permission indicating that a first number of copies are permitted,
the digital content is allowed to be recorded and managed on the first recording medium in a state of being copyable up to a second number of copies,
the digital content is allowed to be recorded and managed on the second recording medium in a state of being copyable up to a third number of copies,
control is performed so that a sum of the second number of copies and the third number of copies does not exceed the first number of copies, and
in a case where an output path when copying the digital content to the first recording medium and an output path when copying the digital content to the second recording medium are different from each other, different copy control is further performed.

2. The copy control method as claimed in Claim 1, wherein the first recording medium is an internal recording medium (113) on which the digital content that is locally encrypted is recorded, and the second recording medium is a removable recording medium (118) on which the digital content that is locally encrypted is recorded.

3. A copy control method for receiving digital content and a plurality of types of copy control information for controlling copying of the digital content, and copying the digital content from a first recording medium to a second recording medium according to the plurality of types of copy control information, the copy control method being **characterized in that**
when first information in the received plurality of types of copy control information shows copy generation information permitting one-generation copying,
in a case where second information in the received plurality of types of copy control information shows limited-number copy permission indicating that a predetermined number of copies are permitted, the digital content is allowed to be recorded and managed on the first recording medium in a state of being copyable up to the predetermined number of copies, and the digital content recorded and managed on the first recording medium is moved to the second recording medium while maintaining the predetermined number of copies, and
in a case where an output path when copying the digital content from the first recording medium to the second recording medium is different, different copy control is performed.

4. The copy control method as claimed in Claim 3, wherein the first recording medium is an internal recording medium (113) on which the digital content that is locally encrypted is recorded, and the second recording medium is a removable recording medium (118) on which the digital content that is locally encrypted is recorded.

5. The copy control method as claimed in Claim 3, wherein the first recording medium is an internal recording medium (113) on which the digital content that is locally encrypted is recorded, and the second recording medium is a recording medium connected via a digital interface.

6. A copy control method in a reception apparatus (3) for receiving digital content and a plurality of types of copy control information for controlling copying of the digital content, and recording the digital content on a first recording medium and a second recording medium according to the plurality of types of copy control information, the copy control method being **characterized in that**
when first information in the received plurality of types of copy control information shows copy generation information permitting one-generation copying,
in a case where second information in the received plurality of types of copy control information shows limited-number copy permission indicating that a first number of copies are permitted,
the digital content is allowed to be recorded and managed on the first recording medium in a state of being copyable up to a second number of copies,
the digital content is allowed to be recorded and managed on the second recording medium in a state of being copyable up to a third number of copies, and
control is performed so that a sum of the second number of copies and the third number of copies does not exceed the first number of copies.

7. The copy control method as claimed in Claim 6, wherein the first recording medium is an internal recording medium (113) on which the digital content that is locally encrypted is recorded, and the second recording medium is a removable recording medium (118) on which the digital content that is locally encrypted is recorded.

8. A copy control method for receiving digital content and a plurality of types of copy control information for controlling copying of the digital content, and copying the digital content from a first recording medium to a second recording medium according to the plurality of types of copy control information, the copy control method being **characterized in that**
when first information in the received plurality of types of copy control information shows copy generation information permitting one-generation copying,
in a case where second information in the received plurality of types of copy control information shows limited-number copy permission indicating that a predetermined number of copies are permitted, the digital content is allowed to be recorded and managed on the first recording medium in a state of being copyable up to the predetermined number of copies, and the digital content recorded and managed on the first recording medium is allowed to be moved to the second recording medium while maintaining the predetermined number of copies.

9. The copy control method as claimed in Claim 8, wherein the first recording medium is an internal recording medium (113) on which the digital content that is locally encrypted is recorded, and the second recording medium is a removable recording medium (118) on which the digital content that is locally encrypted is recorded.

10. The copy control method as claimed in Claim 8, wherein the first recording medium is an internal recording medium (113) on which the digital content that is locally encrypted is recorded, and the second recording medium is a recording medium connected via a digital interface.
